(19) Europäisches Patentamt
European Patent Office
Office européen des brevets

(11) **EP 1 511 265 A1**

(12) **EUROPEAN PATENT APPLICATION**

(43) Date of publication:
**02.03.2005 Bulletin 2005/09**

(51) Int Cl.⁷: **H04L 29/06**

(21) Application number: **03292112.4**

(22) Date of filing: **27.08.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Hewlett-Packard Development Company, L.P.**
**Houston, TX 77070 (US)**

(72) Inventors:
• **Garnero, Pierre**
  **06130 Grasse (FR)**

• **Forissier, Jerome**
  **06160 Juan Les Pins (FR)**
• **Brepson, François**
  **06110 Le Cannet (FR)**

(74) Representative: **Lloyd, Richard Graham et al**
**Hewlett-Packard Centre de Compétences France,**
**Intellectual Property Section,**
**Etablissement de Grenoble**
**38053 Grenoble Cedex 09 (FR)**

(54) **Method and apparatus for load sharing of messages between a signalling gateway and remote processing units**

(57) A method is described for controlling a signalling gateway interconnecting a signalling network with a plurality of remote processes in one or more second processing entities, said method comprising the step of determining a remote process as a hash function of global title information contained within a signalling message. In preferred embodiments, the hash function is a CRC-32c cyclic redundancy check function.

Fig 2

**Description**

**BACKGROUND OF THE INVENTION**

Field of the Invention

The invention relates to methods, and related apparatus, for controlling processing entities used, for instance, in communication systems such as for the control of signalling traffic between a signalling gateway and a plurality of application server processes.

Background Art

Establishing connections between two telephones involves a complex interaction of digital messages, hereinafter referred to generally as signalling. Nowadays telephone systems perform what is known as "out-of-band" signalling. Out-of-band signalling means that the communications required between the switches and other equipment in the network take place on communication channels other than the channel by which the voice or data flows. Typically, the out-of-band signalling takes place by means of digital communication channels. Thus, the public switch telephone network (PSTN) generally uses two types of channels, media and signalling.

Several protocols have been defmed for out-of-band signalling. The most commonly used protocol, in North America, Asia and Europe, is known as Signalling System No. 7 (SS7). However, the SS7 protocol defines more than just a protocol for communication between switches. It also defines an entire switching network for facilitating signalling for call establishment, routing, and information exchange functions of switched circuit networks.

Since the amount of data transferred over data networks is now much larger than the voice traffic that is carried over the PSTN, carriers are in the process of consolidating both types of networks. In addition, telecommunication networks are increasingly making use of standard computing hardware in order to reduce IT costs.

Therefore, there is a trend in the telephone industry to migrate telephone systems using SS7-based networks for signalling to Internet Protocol (IP) networks. The Internet protocols are standardised by the Internet Engineering Task Force (IETF). Moving either or both of the media and signalling channels to an IP infrastructure involves the use of very different technologies and can be done independently. One IETF working group, called the Sigtran Group, is defining the protocols for back-hauling SS7 signalling messages across IP networks. Generally speaking, signalling across an IP network involves replacing the lower levels of the SS7 layered protocol communications and transport layers with IP network protocol communications and transport layers.

The IETF in collaboration with the Sigtran group have taken the initiative to define open standards for transporting SS7 over IP networks. With Sigtran technology, telephone services which today lie on top of SS7 networks, can run Application Servers (ASs) lying on top of IP networks. The interworking with SS7 networks is performed by Sigtran signalling gateways (SGs).

For additional information regarding SS7 network switching over IP networks, reference may be made to the (IETF) working drafts "Signalling Connecting Control Part User Adaptation Layer (SUA)" available from the IETF website at www.ietf.org, and IETF RFC 3332 "SS7 MTP3 - User Adaptation Layer (M3UA)", available from the IETF website, and which is incorporated herein by reference as if reproduced in full. It is noted that each of these IETF documents is a work in progress and is therefore subject to change. However, these documents exemplify the changes necessary to a standard SS7 signalling system for its implementation in an IP network context. As well as defining the functions of signalling gateways and signalling gateway processes, the Sigtran documents referred to above specify in detail the protocols to be implemented between an SGP and an ASP.

More general background information regarding Sigtran protocols, reference may be made to the International Engineering Consortium, in document "SS7 Over IP Signalling Transport and SCTP," which is available from the IEC website www.iec.org, and which is incorporated herein by reference as if reproduced in full.

To enhance the availability of the signalling gateway, it can be distributed over several processes running in one or several computers, each of them being a Signalling Gateway Process (SGP). Every SGP belonging to a particular SG has the same SS7 point code (or the same list of PCs), with each SGP being connected to the SS7 network through redundant links.

On the IP side, each SGP is connected to the ASPs running the services. Each AS, which can typically be identified with a single logical service, such as a Short Message Service Centre (SMSC), can be implemented in a distributed manner by one or more processes or computers - referred to as the ASPs. To provide improved reliability, each SGP is typically directly connected to each ASP through an SCTP association such that there is one association between each SGP and each ASP.

There are three modes of Application Server traffic handling in the SGP SUA layer: Override, Loadshare and Broadcast. In the case of Loadshare mode, reception of an ASP Active message at an SGP causes the direction of traffic to the ASP sending the ASP Active message, in addition to all the other ASPs that are currently active in the AS in accordance with a load sharing algorithm. The algorithm at the SGP for load-sharing traffic within an AS to all the active ASPs is not defined in the SUA specification and is implementation dependent. It is suggested in the SUA specification that the algorithm could, for example, be round robin or based on information in the data message.

Published PCT patent application WO 02/51095 proposes a communication apparatus running a protocol stack implementation in which a name based addressing mechanism is used which isolates a logical communication endpoint, such as an ASP, from its IP addresses. A name mapping unit within the SUA layer is adapted to receive a signalling target node name from the signalling source node and to map the signalling target node name into a peer signalling association. The name mapping unit comprises a load sharing management unit adapted to consider at least one criterion selected from a group comprising target node capability, target node load and routing policy to map a destination name into the destination, e.g., a peer signalling association or a transport address. Examples given for the routing policy supported by the load sharing management unit are round robin, weighted round robin, least used, and/or least used with degradation, i.e. increment use value after each use of an IP address or a combination of these.

The problem with round robin or other non-predeterminable approaches is that transactions typically involve a series of related message exchanges and there may be a need to maintain a record at the SG of which ASP is involved in a particular transaction, so that messages involved in a transaction are dispatched to the ASP that maintains context information for the transaction. It is also desirable in at least some applications to be able to predict in advance to which ASP a particular set of messages will be directed. For instance, an ASP may reference a database or cache containing data for only a subset of subscribers and it may be necessary to route all messages with those subscribers as calling party to the ASP that has local access to data for those subscribers.

This invention is directed to the assignment of SS7 messages to identified ASP's in order to balance the workload across the ASP's in a desired, replicable, determinable and computationally efficient manner.

## SUMMARY OF THE INVENTION

In brief, this achieved by a method of controlling a signalling gateway interconnecting an signalling network with a plurality of remote processes in one or more second processing entities, said method comprising the step of determining a remote process as a hash function of global title information contained within a signalling message.

Routing using hashing functions has already been proposed in certain situations where the input data can be expected to relatively well distributed. This is the case with IP addresses - see for example US 6370584. However hash functions, such as SHA or MD5, that are adapted for badly distributed input data such as text are too computationally heavy for implementation in signalling gateways using standard computing technology.

Therefore, the hash function is preferably a cyclic redundancy check function based on polynomial division. In preferred embodiments, the hash function is a CRC-32c function and the determination includes consulting a look-up table comprising polynomial remainder of sets of input bits. The CRC32-c is used for cyclic redundancy checking in the SCTP protocol and must be mandatorily embedded in a Sigtran Signalling Gateway. This function can therefore suitable be reused for the purposes of loadsharing. Thus, at least in preferred embodiments the need is obviated for an additional hash function than the one already present in a Signalling Gateway that uses SCTP.

The second processing entities can be application servers and the remote processes can be application server processes, for instance.

In another aspect, the invention provides a signalling gateway comprising computer program code elements for performing the above described methods.

## BRIEF DESCRIPTION OF THE DRAWINGS

Preferred embodiments of the invention will now be described, by way of example only, with reference to the accompanying drawings in which:

Figure 1 shows the general configuration of a signalling gateway;
Figure 2 shows a basic configuration of the different layers of the layered protocol communications schemes of a Signalling End Point, a Signalling Gateway Process and an Application Server Process;
Figure 3 illustrates SCTP associations between Signalling Gateway processes and Application Server processes;
Figure 4 is a flow diagram illustrating a method for routing a message.

## DETAILED DESCRIPTION OF THE PREFERRED EMBODIMENTS

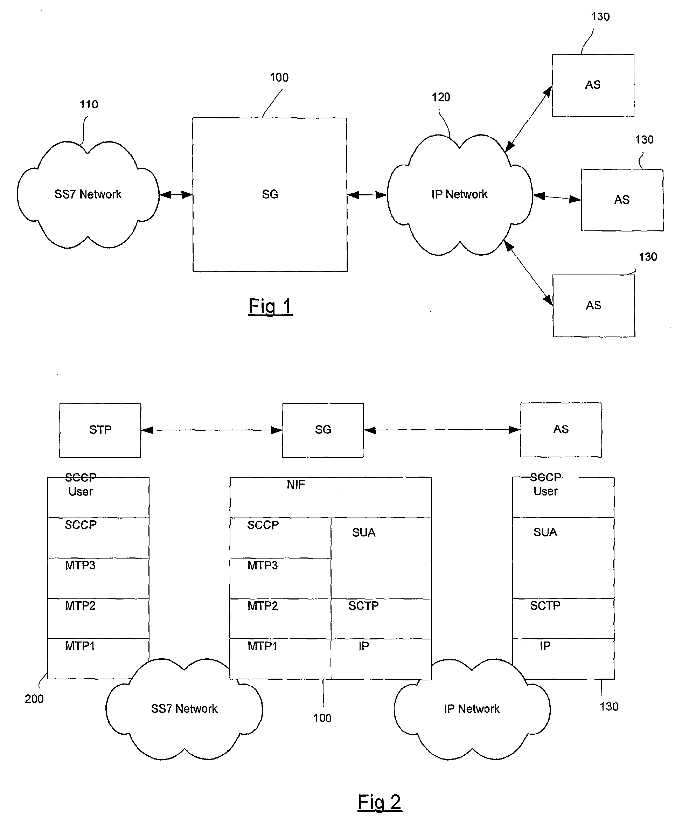

Figure 1 shows the general configuration of a signalling gateway 100 interconnecting an SS7 network 110 and a series of Application Servers (ASs) 130 via an IP Network 120. Figure 2 illustrates the layered software architecture of the various components. SS7 Signal Transfer Point (STP) 200 includes the MTP 1, MTP2, MTP3, SCCP and SCCP user part layers. As is known in the prior art, a Signal Transfer Point (STP) routes SS7 signalling within the SS7 network and manages various signalling links which comprise the SS7 network. Routing is accomplished by processing of the routing label of an SS7 message by the Message Transfer Part (MTP) functionality. The MTP layers comprise three levels. Levels 1 and 2 are used for the transfer of SS7 messages from one point to another over an individual signalling link. Level 3 is used for the transfer of SS7 messages over the SS7 network beyond the requirements of individual link transmission. The MTP3 layer is mainly dedicated to ensuring the delivery of incoming and outgoing messages (such as discrimination, distribution and routing), and the network reconfiguration (such as traffic management, route management and link management).

Communication between Signalling Gateway Processes (SGPs) of the SG 100 and Application Server Processes (ASPs) within the ASs 130 is carried out using a transport layer defined by the Sigtran working group and referred to as SCTP (Stream Control Transfer Protocol). Signalling Gateway 100 terminates the MTP1, MTP2, MTP3 and SCCP layers and includes a Nodal Interworking function (NIF) as well as SUA and SCTP and IP layers. Each AS 130 includes IP, SCTP, SUA and SCCP user layers. Signalling Gateway 100 thus terminates the SS7 lower layers and encapsulates their payload data into SCTP messages to send them to an Application Server 130. The AS terminates the SCTP layers, processes the signalling messages and replies to the SG 100 in the same way.

This architecture is well known to those skilled in the relevant art and is described in the SUA specification defined by the IETF.

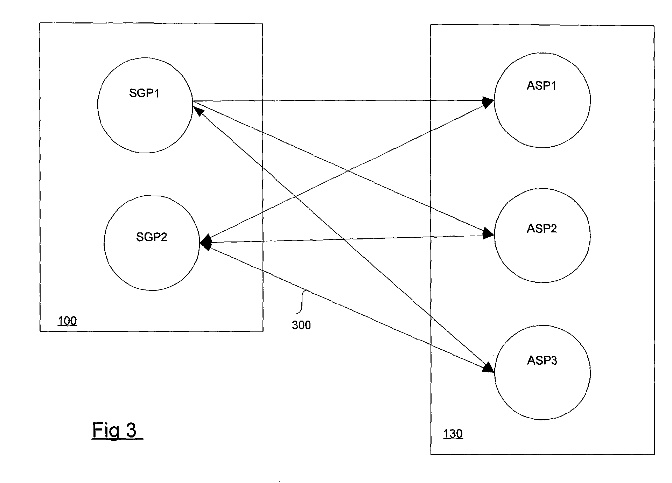

Figure 3 illustrates the interconnection of a plurality of SGPs, such as SGP1 and SGP2 to a plurality of ASPs, such as APS1, ASP2 and ASP3 via a plurality of SCTP associations 300.

The AS for each particular SS7 message received at the SG 100 via SS7 network 110 is determined by a Routing Key. The Routing Key describes a set of SS7 parameters and/or parameter-ranges that uniquely defines the range of signalling traffic configured to be handled by a particular Application Server. An example would be where a Routing Key consists of a particular SS7 SCCP SSN plus an identifier to uniquely mark the network that the SSN belongs to, for which all traffic would be directed to a particular Application Server. Possible SS7 address/routing information that comprise a Routing Key entry includes, for example, OPC, DPC, SIO found in the MTP3 routing label, SCCP subsystem number, or Transaction ID. IP addresses and hostnames can also be used as Routing Key Information. Routing Keys are mutually exclusive in the sense that a received SS7 signalling message cannot be directed to more than one Routing Key.

So when an SGP inside an SG receives a message coming from the SS7 network, at least 2 determinations must be made:

First, the SGP needs to determine the AS to which the message must be forwarded based on the provisioned Routing Keys.

And then, the ASP within the AS needs to be determined. For the purpose of this invention description, we will suppose that the ASPs inside the AS are in loadshare mode.

In this embodiment, SUA message traffic is distributed between the ASPs inside an AS, based on the calling party GTAI (Global Title Address Information) of an SS7 message received from an SS7 network by a SUA SG. As is well known, the Global Title generally consists of a regular directory telephone number and information as to how to interpret that number. Since these numbers are assigned in many different ways and can have a wide range of different sizes and formats, they are in general extremely badly distributed numerically.

To map the GTAI into a fixed numerical range a hash function f() is employed that provides a uniform output in the range $0..2^{32} - 1$.

The hash function f() used is the CRC-32c which is defined in RFC3309 in connection with SCTP. This CRC function has generator polynomial:

$$x^{32}+x^{28}+x^{27}+x^{26}+x^{25}+x^{23}+x^{22}+x^{20}+x^{19}+x^{18}+x^{14}+x^{13}+x^{11}+x^{10}+x^9+x^8+x^6+x^0.$$

This known function is used for cyclic redundancy checking within the SCTP connections. This function, applied on badly distributed GTAI values, has been found to return a sufficiently uniform distribution in the range $0..2^{32} - 1$ to serve as a hash function. The function ensures that 2 identical GTAI values as input always provide the same result value so that a message with a particular GTAI value is always forwarded to the same ASP.

In the preferred embodiment, the CRC-32c function is implemented in a known computationally efficient manner using a pre-computed look-up tables giving the polynomial remainder of multiple input bits as described in RFC 3309.

Using this hash function, the SG does not need to maintain a large database to ensure the right distribution of messages according to the ASPs. The SG is provisioned with the percentage of messages that must be forwarded to a particular ASP and then each message is routed following a dynamic calculation of the hash value.

For example, suppose that a SG is configured with 1 AS served by 3 ASPs: ASP1, ASP2 and ASP3 and it is desired that:

- ASP1 receives 20% of the traffic

- ASP2 receives 30% of the traffic

- ASP3 receives 50% of the traffic

A means are provided to provision this by defining a series of thresholds for the hash results, using for instance an appropriate configuration file accessible to the SG, and then, each time an SS7 message is received by the SG 100, the CRC-32c function is performed on the GTAI of the calling address of the message and this function returns a value between $0..2^{32}-1$. Note that this calculation may be carried out in any one of a plurality of SGPs in a single SG and will return the same result.

According to the provisioning (ASP1=>20%, ASP2=>30% and ASP3=>50%), the output range of the CRC32-c is split in 3 parts (because in this case we have 3 ASPs):

| Range | 20% | 30% | 50% |
|---|---|---|---|
| CRC32-c value range according to GTAI input parameter | Between 0 and INT $(2^{32}x0.2)$ | Between INT$(2^{32} * 0.2)+1$ and INT$(2^{32} * 0.2)+1+$ INT $(2^{32} * 0.3)$ | Between INT$(2^{32} * 0.2)+1+$ INT$(2^{32} * 0.3)+1$ and $2^{32} - 1$ |
| Decision | Message to be forwarded to ASP1 | Message to be forwarded to ASP2 | Message to be forwarded to ASP3 |

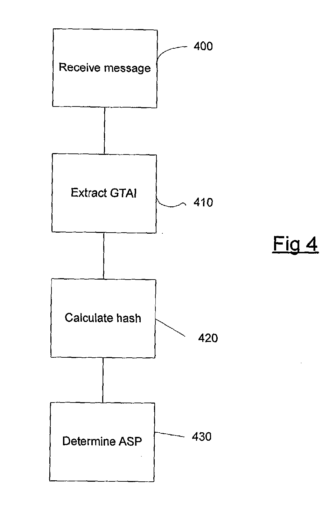

This process is illustrated in Fig 4 which shows the step 400 of receiving a message, a step 410 of extracting the GTAI, the step 420 of calculating a hash function and a step 430 of determining a particular ASP according to the hash function.

We have performed a set of tests against a database containing around 30,000 GTAI that represents a snapshot of actual (random) calls made during a few hours. The outcome of the tests showed that the CRC-32c output is sufficiently close to being uniform and is thus suitable for this purpose.

For instance, using the above described hashing algorithm based on CRC32c to loadshare this simulated traffic between 2 ASPs, with a target load of 20% on the first ASP, we actually obtained 23% to ASP0 and 77% to ASP1. This tends to show that the homogeneity of the distribution produced by CRC32c is sufficient for the above-described application to loadsharing in a Signalling Gateway.

The above discussion is meant to be illustrative of the principles and various embodiments of the present invention. Numerous variations and modifications in each of the illustrated examples will become apparent to those skilled in the art once the above disclosure is fully appreciated. It is intended that the following claims be interpreted to embrace all such variations and modifications. Even though the following description focuses on implementing a SUA signalling gateway, it should also be kept in mind that the same techniques may also be applied in M3UA signalling gateways or any other similar or comparable situation.

**Claims**

1. A method of controlling a signalling gateway interconnecting a signalling network with a plurality of remote processes in one or more second processing entities, said method comprising the step of determining a remote process as a hash function of global title information contained within a signalling message.

2. A method as claimed in claim 1 wherein the hash function is a cyclic redundancy check function.

3. A method as claimed in claim 2 wherein the cyclic redundancy check function comprises polynomial division.

4. A method as claimed in claim 2 wherein the hash function is a CRC-32c function.

5. A method as claimed in claim 3 or claim 4 wherein the determination includes consulting a look-up table comprising polynomial remainder of sets of input bits.

**6.** A method as claimed in any preceding claim comprising comparing the result of the hash function with one or more predeterminable thresholds.

**7.** A method as claimed in any preceding claim wherein the second processing entities are application servers and the remote processes are application server processes.

**8.** A method as claimed in any preceding claim comprising routing the messages by dynamic determination of a destination address each time a message is received.

**9.** A method of routing a message comprising receiving a message;
extracting global title information from the message, calculating a hash function of the global title information and determining a destination for the message according to the result hash function.

**10.** A method as claimed in claim 8 wherein the hash function is the CRC-32c.

**11.** A signalling gateway comprising computer program code elements for performing a method as claimed in any preceding claim.

130

100

110                    120

SS7 Network    ←→    SG    ←→    IP Network    ←→    AS

                                                    130

                                               AS

                                                    130

                                               AS

## Fig 1

| STP | ←→ | SG | ←→ | AS |

| SCCP User | | NIF | | SCCP User |
|-----------|---|-----|---|-----------|
| SCCP | | SCCP | SUA | SUA |
| MTP3 | | MTP3 | | |
| MTP2 | | MTP2 | SCTP | SCTP |
| MTP1 | | MTP1 | IP | IP |

200

SS7 Network

100

IP Network

130

## Fig 2

7

SGP1

SGP2

ASP1

ASP2

ASP3

100

130

300

Fig 3

```
┌──────────────────┐
│                  │      ⌒ 400
│  Receive message │
│                  │
└──────────────────┘
         │
┌──────────────────┐
│                  │
│   Extract GTAI   │      ⌒ 410
│                  │
└──────────────────┘
         │
┌──────────────────┐
│                  │
│  Calculate hash  │
│                  │      ⌒ 420
└──────────────────┘
         │
┌──────────────────┐
│                  │      ⌒ 430
│  Determine ASP   │
│                  │
└──────────────────┘
```

Fig 4

**European Patent Office**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y,D | LOUGHNEY J ET AL: "Signalling Connection Control Part User Adaptation Layer draft-ietf-sigtran-sua-14.txt" INET, 30 June 2002 (2002-06-30), XP002253252 Retrieved from the Internet: <URL:http://www.openss7.org/sigtran03.html > [retrieved on 2003-09-03] * page 82, chapter 4.1.1 * --- | 1-11 | H04L29/06 |
| Y | IETF NETWORK WORKING GROUP: "RFC 2992 - "Analysis of an Equal-Cost Multi-Path Algorithm" Hash-Threshold (CRC)" INET, [Online] November 2000 (2000-11), XP002267341 Retrieved from the Internet: <URL:http://www.watersprings.org/pub/rfc/r fc2992.txt > [retrieved on 2004-01-20] * page 1, chapter 1 * * page 2, chapter 2 * * page 3, chapter 2.2 * --- | 1,2,4, 6-11 | |
| Y,D | IETF NETWORK WORKING GROUP: "RFC 3309 - "Stream Control Transmission Protocol (SCTP) Checksum Change" CRC 32-c" INET, [Online] September 2002 (2002-09), XP002267342 Retrieved from the Internet: <URL:http://www.watersprings.org/pub/rfc/r fc3309.txt> [retrieved on 2004-01-20] | 3,5 | TECHNICAL FIELDS SEARCHED (Int.Cl.7) H04L G06F |
| A | * page 3-6, chapter 2.1 * --- | 4,10 | |
| A | WO 00 74347 A (ENTERA INC) 7 December 2000 (2000-12-07) * page 10 * --- | 1,9,11 | |
| | -/-- | | |

The present search report has been drawn up for all claims

| Place of search | Date of completion of the search | Examiner |
|---|---|---|
| MUNICH | 27 January 2004 | Kamps, S |

EPO FORM 1503 03.82 (P04C01)

**European Patent Office**

**EUROPEAN SEARCH REPORT**

Application Number

EP 03 29 2112

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 2003/137978 A1 (KANETAKE TATSUO) 24 July 2003 (2003-07-24) * paragraphs [0005],[0006] * --- | 1-3,6,9, 11 | |
| A | US 2001/007557 A1 (MIYAO YASUHIRO ET AL) 12 July 2001 (2001-07-12) * paragraphs [0008],[0009] * --- | 1-3,6,9, 11 | |
| A,D | US 6 370 584 B1 (BESTAVROS AZER ET AL) 9 April 2002 (2002-04-09) * column 3, line 21-35 * ----- | 1,9,11 | |

TECHNICAL FIELDS
SEARCHED (Int.Cl.7)

The present search report has been drawn up for all claims

| Place of search | Date of completion of the search | Examiner |
|---|---|---|
| MUNICH | 27 January 2004 | Kamps, S |

EPO FORM 1503 03.82 (P04C01)

## ANNEX TO THE EUROPEAN SEARCH REPORT
## ON EUROPEAN PATENT APPLICATION NO.

EP 03 29 2112

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2004

| Patent document cited in search report | | Publication date | Patent family member(s) | | Publication date |
|---|---|---|---|---|---|
| WO 0074347 | A | 07-12-2000 | US<br>AU<br>WO | 6542964 B1<br>4661600 A<br>0074347 A1 | 01-04-2003<br>18-12-2000<br>07-12-2000 |
| US 2003137978 | A1 | 24-07-2003 | JP | 2003218918 A | 31-07-2003 |
| US 2001007557 | A1 | 12-07-2001 | JP<br>DE | 2001197118 A<br>10100841 A1 | 19-07-2001<br>11-10-2001 |
| US 6370584 | B1 | 09-04-2002 | NONE | | |

EPO FORM P0459

For more details about this annex : see Official Journal of the European Patent Office, No. 12/82